(19) Europäisches Patentamt
European Patent Office
Office européen des brevets

(11) **EP 1 079 478 B1**

(12) **EUROPÄISCHE PATENTSCHRIFT**

(45) Veröffentlichungstag und Bekanntmachung des Hinweises auf die Patenterteilung:
**12.09.2007  Patentblatt 2007/37**

(51) Int Cl.:
*H01R 43/05* (2006.01)    *H01R 43/052* (2006.01)
*H02G 1/12* (2006.01)

(21) Anmeldenummer: **99811045.6**

(22) Anmeldetag: **15.11.1999**

(54) **Verfahren zum Abtrennen und/oder Entfernen der Isolierung von Kabeln, sowie eine Vorrichtung zur Durchführung dieses Verfahrens**

Method and device for cutting and/or removing insulation from insulated cables

Procédé et dispositif pour couper et/ou dénuder des fils isolés

(84) Benannte Vertragsstaaten:
**CH DE FR GB IT LI**

(30) Priorität: **20.08.1999   CH 152499**

(43) Veröffentlichungstag der Anmeldung:
**28.02.2001   Patentblatt 2001/09**

(73) Patentinhaber: **Komax Holding AG**
**6036 Dierikon (CH)**

(72) Erfinder: **Mehri, Urs**
**6370 Stans (CH)**

(74) Vertreter: **EGLI-EUROPEAN PATENT ATTORNEYS**
**Horneggstrasse 4**
**Postfach**
**8034 Zürich (CH)**

(56) Entgegenhaltungen:
| | |
|---|---|
| **EP-A- 0 365 691** | **CH-A- 660 096** |
| **US-A- 4 873 901** | **US-A- 4 993 147** |
| **US-A- 5 469 763** | |

Anmerkung: Innerhalb von neun Monaten nach der Bekanntmachung des Hinweises auf die Erteilung des europäischen Patents  kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren sowie eine Vorrichtung zum Abtrennen und/oder Abisolieren von mindestens einer Lage einer Ummantelung eines kabelförmigen Leiters.

Die bisherigen Abisoliervorrichtungen weisen den gravierenden Nachteil auf, dass aus zähem Material bestehende Ummantelungen und Leiterisolationen bei Einsatz von zwei V-förmigen Abisoliermessern oft nur unter grossem Kraftaufwand abgerissen werden können, was ausser der Erfordernis von kräftigen Abzugseinheiten infolge der erforderlichen hohen Abzugskräften ungenaue Abisolierlängen ergibt.

Eine Abisolierung von Leiterendabschnitten mittels eines während des Einschneidvorgangs rotierenden Abisolierkopfes hätte den Nachteil, dass der zu bearbeitende Leiterendabschnitt zur Vermeidung einer Drehung des Leiters während des rotierenden Schneidvorgangs möglichst nahe der Einschneidstelle gehalten werden müsste, was bei während des Abisoliervorgangs vor- und rückwärts bewegten Leitern relativ schwierig und kompliziert zu bewerkstelligen ist.

US 4993147 offenbart beispielsweise eine Vorrichtung zum Abisolieren von Kabeln, welche zwei auf gegenüberliegenden Seiten des jeweiligen Kabels angeordnete Schneidmesser mit jeweils einer geraden Schneide aufweist. Zum Abisolieren eines runden Kabels werden zunächst in der Nähe eines Kabelendes Schnitte in einem äusseren Mantel des Kabels erzeugt, indem die Schneidmesser simultan radial bezüglich der Mittenachse des Kabels in Richtung auf die Mittenachse des Kabels und - durch eine gleichzeitige, gemeinsame Rotation der Schneidmesser in einer vorgegebenen Drehrichtung um die Mittenachse des Kabels - transversal bezüglich des Kabels bewegt werden. Wenn die Schnitte eine vorgegebene Tiefe erreicht haben, wird das Kabel axial in die dem Kabelende entgegengesetzte Richtung bewegt, wobei ein Endabschnitt des Mantels an den Messern abgetrennt und vom Kabel entfernt wird.

US 4873901 und CH 660096 offenbaren jeweils eine Vorrichtung zum Abisolieren von Kabeln mit zwei auf gegenüberliegenden Seiten des jeweiligen Kabels angeordneten Schneidmessern, welche jeweils eine Schneide mit einer halbkreisförmigen, an die Form des Umrisses des Innenleiters des jeweiligen Kabels angepasste Kerbe aufweisen. Zum Abisolieren eines runden Kabels werden zunächst mittels der Kerben der jeweiligen Schneiden in der Nähe eines Kabelendes Schnitte in einem äusseren Mantel des Kabels erzeugt, indem die Schneidmesser jeweils radial zur Mittenachse des Innenleiters in Richtung auf den Innenleiter bewegt werden. Anschliessend wird das Kabel axial in die dem Kabelende entgegengesetzte Richtung bewegt, wobei ein Endabschnitt des Mantels an den Messern abgetrennt und vom Kabel entfernt wird. Die Vorrichtung gemäss US 4873901 umfasst mehrere Paare der genannten Messer mit jeweils unterschiedlich geformten Kerben, um verschiedene Kabel mit jeweils verschiedenen Durchmessern der jeweiligen Innenleiter abisolieren zu können. Die Vorrichtung gemäss CH 660096 umfasst zusätzlich ein Paar von Messern mit jeweils geraden Schneiden zum Durchtrennen des jeweiligen Kabels, wobei diese Messer ausschliesslich radial bezüglich des Kabels in einer Richtung bewegbar sind.

EP 0365691 A1 offenbart eine Vorrichtung zum Abtrennen und Abisolieren von Kabeln, welche zwei auf gegenüberliegenden Seiten des jeweiligen Kabels angeordnete Schneidmesser mit jeweils einer V-förmigen Schneide aufweist. Zum Abtrennen von Kabelabschnitten mittels der V-förmigen Schneiden werden die Messer jeweils in einer Richtung gegeneinander bewegt. Zum Abisolieren eines Kabels werden mit den V-förmigen Schneiden jeweils in der Nähe eines Kabelendes Schnitte in einem Mantel des Kabels erzeugt, indem die Messer jeweils radial zur Mittenachse des Innenleiters in Richtung auf den Innenleiter bewegt werden. Anschliessend wird das Kabel axial in die dem Kabelende entgegengesetzte Richtung bewegt, wobei ein Endabschnitt des Mantels an den Messern abgetrennt und vom Kabel entfernt wird.

US 5469763 offenbart ebenfalls eine Vorrichtung zum Abtrennen und Abisolieren von Kabeln. Die Vorrichtung weist zwei in einer Richtung radial bezüglich des Kabels geführte, jeweils gegenläufig bewegbare Schneidmesser mit einer V-förmigen und einer U-förmigen Schneide auf, die dazu bestimmt sind, das Kabel zu durchtrennen. Zum Durchtrennen des Kabels werden die Schneidmesser jeweils auf die Mittelachse des Kabels zu- und anschliessend wieder zurückbewegt. Zum Abisolieren des Kabels sind zwei zusätzliche Messer mit jeweils V-förmigen Schneiden vorgesehen. Die Vorgehensweise beim Abisolieren ist analog zu dem aus EP 0365691 A1 bekannten Verfahren.

Aufgabe der vorliegenden Erfindung ist die Schaffung eines Verfahrens der eingangs genannten Art, welches die vorangehend angeführten Nachteile bisher bekannter Verfahren dieser Art nicht aufweist, d.h. mittels welchem ein Abisolieren selbst zähester und dickster Ummantelungen oder Isolationen ohne aufwendige Fixierung des zu bearbeitenden Leiterendabschnittes gegen Verdrehen möglich ist.

Diese Aufgabe wird bei einem Verfahren der eingangs genannten Art erfindungsgemäss nach Anspruch 1 gelöst.

Zweckmässige Weiterausgestaltungen des erfindungsgemässen Verfahrens sind Gegenstand der Ansprüche 2 bis 7.

Gegenstand der Erfindung ist ausserdem eine Vorrichtung zur Durchführung des erfindungsgemässen Verfahrens nach Anspruch 8.

Zweckmässige Weiterausgestaltungen der erfindungsgemässen Vorrichtung sind Gegenstand der Ansprüche 9 - 13.

Nachstehend wird die Erfindung anhand der Zeichnungen erläutert. Es zeigt:

Fig. 1    in verkleinertem Massstab eine Frontansicht einer Ausführungsform einer erfindungsgemässen Abisoliervorrichtung;

Fig. 2    eine perspektivische Seitenansicht der in Fig. 1 dargestellten Abisoliervorrichtung;

Figuren 3 bis 10    in verschiedenen Ansichten die in der Abisoliervorrichtung gemäss den Figuren 1, 2, 4 und 5 eingesetzte, um die Längsachse des zu bearbeitenden Leiterendabschnittes schwenkbare Schneidmessereinheit inklusive deren Antrieb, und in verschiedenen Arbeitspositionen.

Fig. 11    eine Seitenansicht der als unabhängiges Abtrenn-Einsatzmodul in der Vorrichtung gemäss Fig. 1 und 2: einsetzbaren Abtrenneinheit;

Fig. 12    eine perspektivische Seitenansicht der in Figur 11 dargestellten Abtrenneinheit;

Fig. 13    die Abisoliervorrichtung gemäss Fig. 1 mit einem nach den Figuren 11 und 12 ausgebildeten, zusätzlich eingesetzten Abtrenn-Einsatzmodul;

Fig. 14    eine perspektivische Ansicht der in Fig. 5 dargestellten Abisoliervorrichtung.

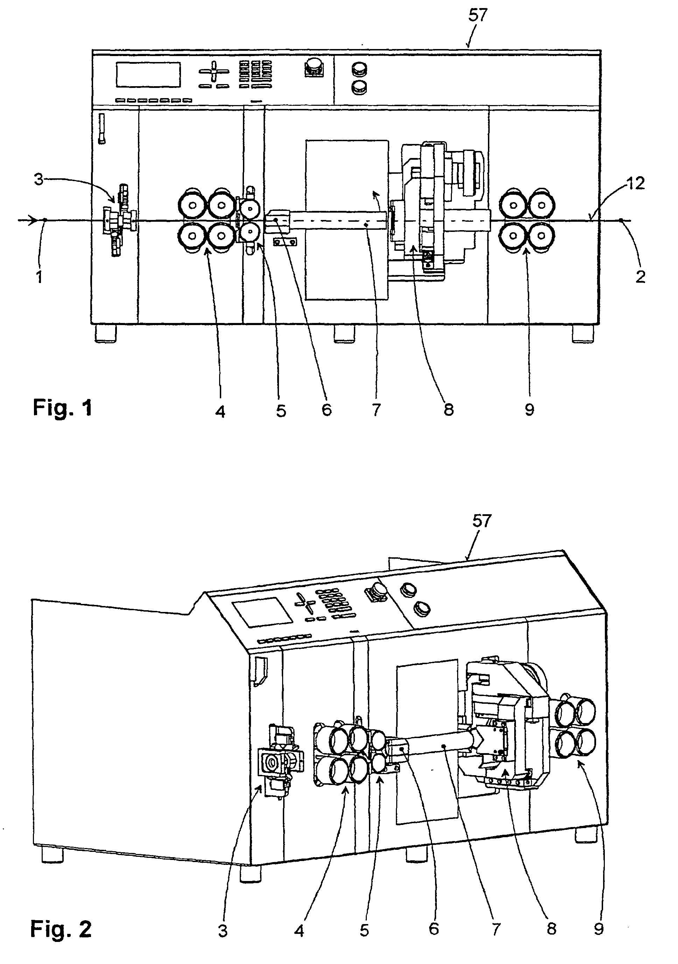

Wie aus den Figuren 1 und 2 ersichtlich, weist die in diesen Figuren dargestellte Ausführungsform einer erfindungsgemässen Vorrichtung 57 zum beidseitigen Abtrennen und Abisolieren von mindestens einer Lage einer Ummantelung eines von einem Leiter 1 abzutrennenden Leiterabschnittes 2 auf der Leiterzufuhrseite zuerst eine Schlitzvorrichtung 3 zum wahlweisen Längsschlitzen einer abzutrennenden oder abzuisolierenden Lage einer Ummantelung oder Isolierung eines kabelförmigen Leiters 1 auf.

Danach folgt eine über eine Steuerung gesteuerte, über Schrittmotoren angetriebene Antriebseinheit 4, welcher zur Kontrolle der effektiven Vorschubstrecken des hin und her transportierten Leiters 1 eine mittels Abtastrollen auf der Leiteroberfläche aufliegende Encodereinheit 5 nachgeschaltet ist. Nach der Letzteren folgt ein in einer Vertikalebene um eine Horizontalachse 6 verschwenkbares Leiterführungsrohr 7 zur Zufuhr des zu verarbeitenden Leiters 1 zur Schneidmessereinheit 8.

In Transportrichtung des zu verarbeitenden Leiters 1 gesehen nach der Schneidmessereinheit 8 folgt eine zweite Antriebseinheit 9 zum Hin- und Hertransport des vom Leiter 1 in der Schneidmessereinheit 8 auf die gewünschte Leiterlänge abgetrennten Leiterabschnittes 2.

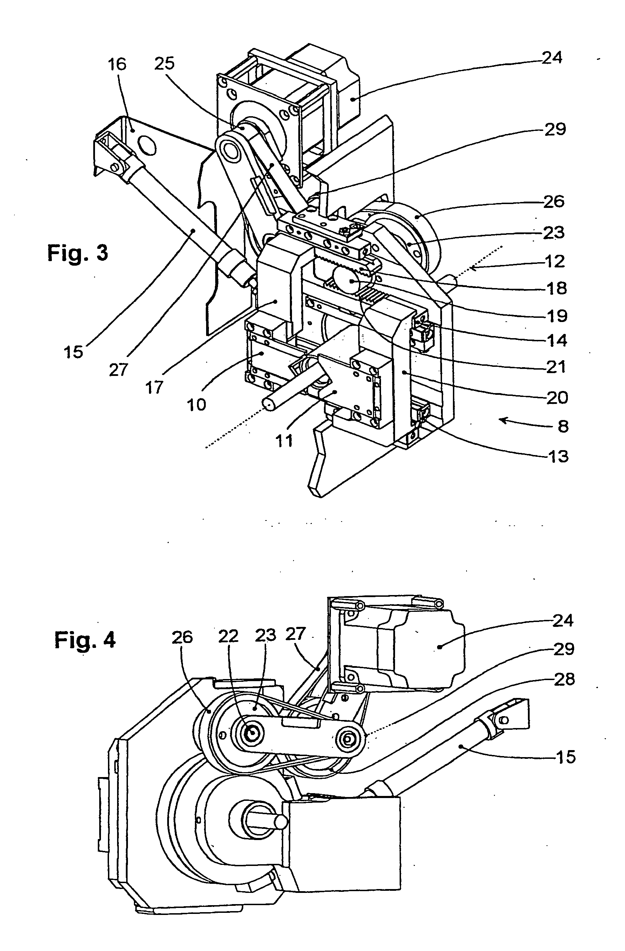

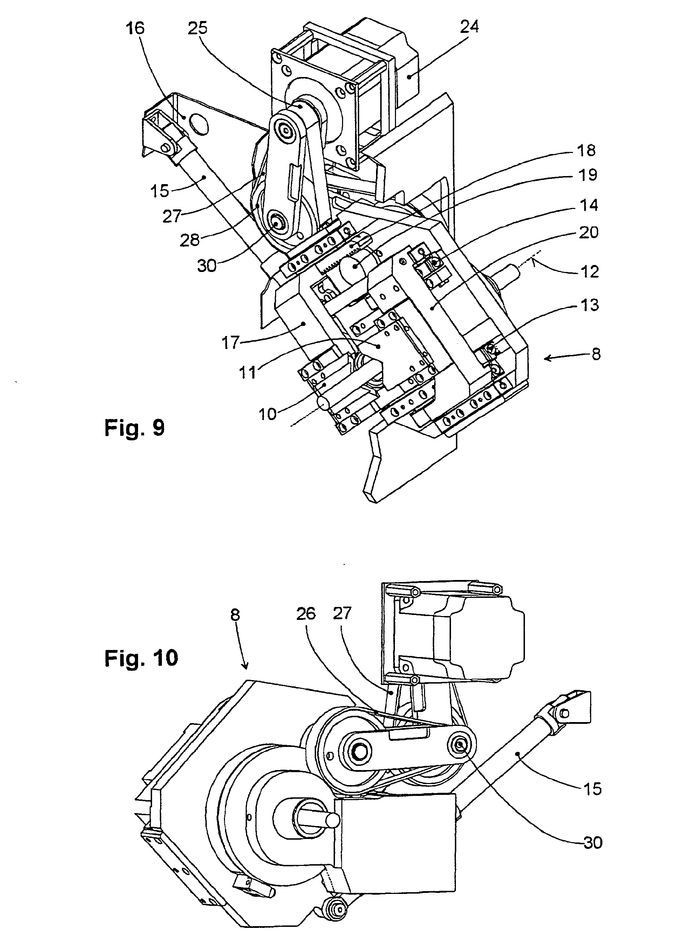

Der Aufbau und die Funktionsweise der Schneidmessereinheit 8 wird nachstehend anhand der Figuren 3 bis 10 näher beschrieben.

Wie aus diesen Figuren ersichtlich, sind die beiden mit einer V-förmigen Schneide versehenen Messer 10 und 11 der Schneidemessereinheit 8 längs der beiden auf der Letzteren angeordneten Führungen 13 und 14 in radialer Richtung auf die Leiterlängsachse 12 zu und von dieser weg verschiebbar.

Die Schneidemessereinheit 8 ist um 45° um eine Leiterlängsachse 12 schwenkbar. Zur Verschwenkung der Schneidmessereinheit 8 um 45° dient ein an der letzteren angelenkter Hydraulik- oder Pneumatikzylinder 15, welcher seinerseits an einem stationären Basisteil 16 verschwenkbar angelenkt ist.

Zur synchronen Verschiebung der beiden Messer 10 und 11 aufeinander zu und voneinander weg ist einerseits das Messer 10 auf einem auf den Längsführungen 13 und 14 verschiebbar geführten Halterungsteil 17 befestigt, welcher über eine Zahnstange 18 mit einem in der Schneidmessereinheit 8 drehbar gelagerten Antriebsritzel 19 antriebsmässig in Eingriff steht, und andererseits das Messer 11 auf einem auf den Längsführungen 13 und 14 verschiebbaren Halterungsteil 20 befestigt, welcher über eine Zahnstange 21 ebenfalls mit dem Antriebsritzel 19 antriebsmässig in Eingriff steht.

Zum Antreiben des Ritzels 19 dient eine auf der Ritzelwelle 22 befestigte Riemenscheibe 23. Die Riemenscheibe 23 ist über die beiden Antriebsriemen 26 und 27 mit einer mit dem Antriebsmotor 24 verbundenen Antriebsscheibe 25 antriebsmässig verbunden, um eine Kompensation der bei einer Verschwenkung der Schneidmessereinheit 8 um 45° auftretenden Veränderung des Abstandes zwischen der Riemenscheibe 23 und der Antriebsscheibe 25 und eine Erhöhung des Antriebsdrehmoments zu ermöglichen.

Dazu umschlingt der Antriebsriemen 27 auf der Abtriebsseite eine grössere Riemenscheibe 28, welche zur Erzielung einer Übersetzung seitlich starr mit einer kleineren Riemenscheibe 29 verbunden ist. Von dieser kleineren Riemenscheibe 29 aus verläuft der zweite Endlosriemen 26 seinerseits um die grössere Riemenscheibe 23. Die Verbindungswelle 30 zwischen den beiden derart starr miteinander gekoppelten Riemenscheiben 28 und 29 ist drehbar im Mittelgelenkteil einer Kniehebelanordnung gelagert. Auf diese Weise ist ein präziser Antrieb der beiden Schneidmesser 10 und 11 selbst bei einer Verschwenkung der Schneidmessereinheit 8 um 45° sichergestellt.

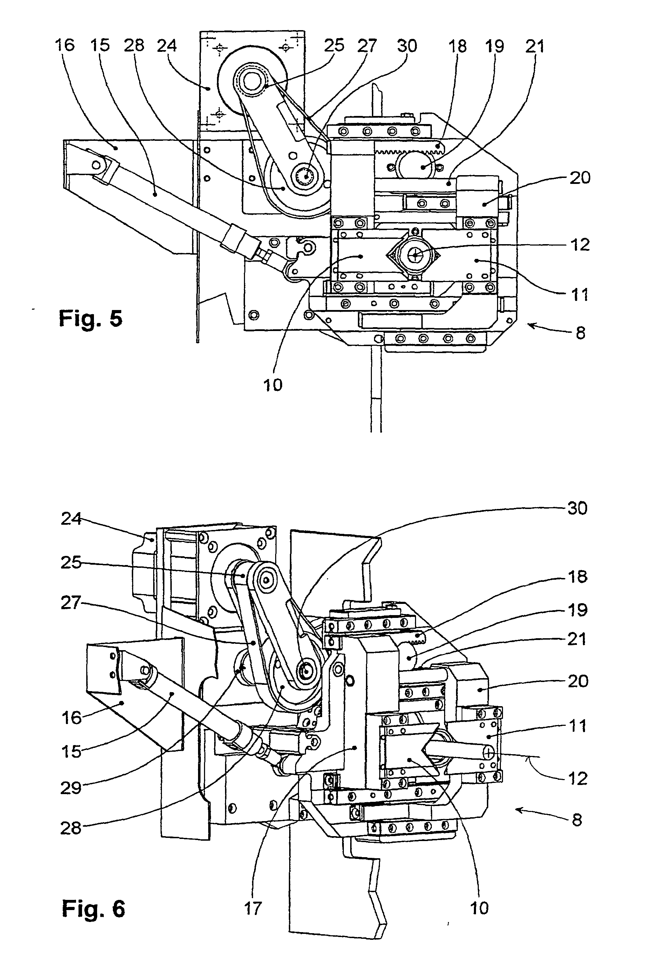

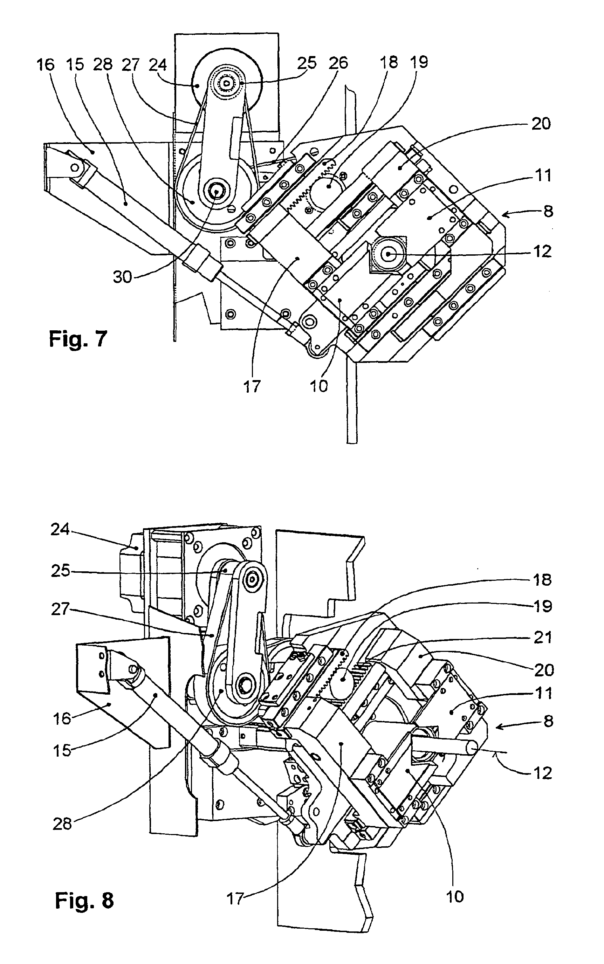

In den Figuren 7 bis 10 ist die Schneidmessereinheit 8 gegenüber der in den Figuren 5 und 6 dargestellten Positionen um 45° verschwenkt.

Selbstverständlich sind auch kleinere Schritte als 45° denkbar.

Der Arbeitsablauf zum beidseitigen Abtrennen und Abisolieren von mindestens einer Lage einer Ummantelung eines von einem Leiter 1 abzutrennenden kabelförmigen Leiterabschnittes 2 ist wie folgt:

Zuerst wird der Leiter 1 mittels der Antriebseinheit 4 durch das Leiterführungsrohr 7 hindurch bis in den Schneidbereich der beiden Schneidmesser 10 und 11 vorwärts bewegt und dort der Leiter 1 durchtrennt. Danach wird der Leiter 1 mit Hilfe der Antriebseinheit 4 sowie der nachgeschalteten Encodereinheit 5 präzise um einen der in einem Steuergerät eingegebenen gewünschten Abisolierlänge entsprechenden Betrag weiter vorwärts bewegt, und dann werden die beiden Schneidmesser 10 und 11 von einander gegenüberliegenden Seiten mit Hilfe des Schrittmotors 24 um einen vorbestimmten Betrag in schneidenden Eingriff mit dem zu bearbeitenden Leiterendabschnitt gebracht, und anschliessend zur Vermeidung einer Drehung des Leiters 1 derart zurückgezogen, dass die Schneidmesser 10 und 11 ausser Eingriff mit dem Leiter 1 gebracht werden. Dann wird die Schneidmessereinheit 8 mit Hilfe des Pneumatikzylinders 15 um 45° verschwenkt (Figuren 7 bis 10), und dann werden die beiden Schneidmesser 10 und 11 erneut von einander gegenüberliegenden Seiten mit Hilfe des Schrittmotors 24 um den gleichen vorbestimmten Betrag in schneidenden Eingriff mit dem zu bearbeitenden Leiterendabschnitt gebracht, und durch Zurückziehen (in Fig. 1 nach links) des zu bearbeitenden Leiterendabschnittes mit Hilfe der Antriebseinheit 4 wird die derart durchtrennte Lage der Ummantelung auf bekannte Weise mittels der beiden Schneidmesser 10 und 11 längs der Leiterlängsachse 12 in Richtung auf das freie Ende des Leiterendabschnittes verschoben.

Je nachdem, wenn z.B. ein Doppelmantelleiter bearbeitet werden soll, kann dieser Abisoliervorgang gegebenenfalls ein- oder mehrmals mit abgestufter Einschneidtiefe wiederholt werden.

Danach wird der derart einseitig bearbeitete Leiter 1 mittels der Antriebseinheit 4 präzise soweit durch die Schneidebene der Schneidmesser 10 und 11 hindurch vorwärts (in Fig. 1 nach rechts) bewegt, bis der Abstand zwischen der Schneidebene und dem freien Ende des vorgängig bearbeiteten Leiterendabschnittes der gewünschten Leiterabschnittlänge entspricht, und dann der Leiter 1 mit Hilfe der beiden Schneidmesser 10 und 11 durchtrennt.

Anschliessend wird das im schwenkbaren Leiterführungsrohr 7 sich befindende, dem derart vorgängig abgetrennten Leiterabschnitt 2 stirnseitig gegenüberstehende freie Ende des Leiters 1 aus dem Bearbeitungsbereich der Schneidmessereinheit 8 herausgeschwenkt, und der abgetrennte Leiterabschnitt 2 mit Hilfe der zweiten Antriebseinheit 9 um einen der gewünschten Abisolierlänge entsprechenden Betrag zurückbewegt, d.h. in Figur 1 nach links bewegt, und der Abisoliervorgang an diesem zweiten, in Figur 1 linken Endabschnitt des abgetrennten Leiterabschnittes 2 analog zum Abisoliervorgang am ersten, in Figur 1 rechten, Endabschnitt durchgeführt, nur mit umgekehrten Bewegungsrichtungen des abgetrennten Leiterabschnittes 2, indem hier z.B. die abgetrennte Ummantelung (in Fig. 1) nach links in Richtung auf das freie linke Ende des Leiterabschnittes 2 verschoben oder abgezogen wird.

Danach wird der derart beidseitig fertig bearbeitete Leiterabschnitt 2 mit Hilfe der Antriebseinheit 9 (in Fig. 1 nach rechts) abgeführt.

Das vorher mit Hilfe des schwenkbaren Leiterführungsrohres 7 aus dem Bearbeitungsbereich der Schneidmesser 10 und 11 herausgeschwenkte freie Ende des Leiters 1 wird nun wieder in den Bearbeitungsbereich der Schneidmessereinheit 8 hineingeschwenkt, mit Hilfe der Antriebseinheit 4 präzise um einen der gewünschten Abisolierlänge entsprechenden Betrag (in Fig. 1 nach rechts) weiter vorwärts bewegt, und danach der Abisoliervorgang, der Weitertransport des derart einseitig bearbeiteten Leiters 1 (in Fig. 1) nach rechts, der Abtrennvorgang, die anschliessende linksseitige Bearbeitung des abgetrennten Leiterabschnittes 2 nach vorgängiger Herausschwenkung des rechten freien Endes des Leiters 1 mit Hilfe des Leiterführungsrohres 7, sowie die Abfuhr des fertig bearbeiteten Leiterabschnittes 2 nach rechts aus der Abisoliervorrichtung 57 heraus, analog zu vorher wiederholt, so dass sich eine nochmalige Beschreibung dieser Verfahrensschritte erübrigt.

Sollen Leiter 1 grösseren Querschnitts verarbeitet werden, dann ist es möglich, dass die Schneidmessereinheit 8 zu schwach zum Durchtrennen des Leiters 1 dimensioniert ist.

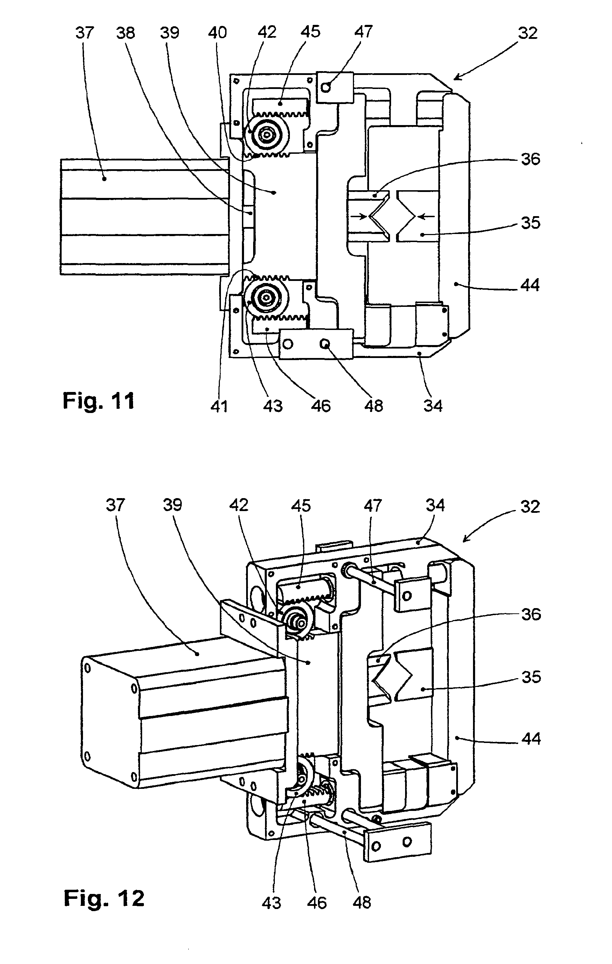

In diesem Fall wird, wie aus den Figuren 11 bis 14 ersichtlich, der Schneidmessereinheit 8 eine separate Leiterdurchtrennmoduleinheit 32 vorgeschaltet, d.h. als Zusatzeinheit in eine Aussparung 33 der Vorrichtung 57 eingesteckt.

Diese zusätzlich einsteckbare Leiterdurchtrennmoduleinheit 32 weist, wie insbesondere aus den Figuren 11 und 12 ersichtlich, einen Einschubrahmen 34 auf, innerhalb welchem die beiden Durchtrennmesser 35 und 36 synchron zueinander aufeinander zu und voneinander weg verschiebbar sind, indem ein am Einschubrahmem 34 befestigter Pneumatikzylinder 37 über eine Kolbenstange 38 auf einen mit dem Durchtrennmesser 36 verbundenen Führungsteil 39 wirkt.

Der Führungsteil 39 ist dabei oben und unten mit je einer Zahnstangenanordnung 40 bzw. 41 versehen, welche über je ein im Einschubrahmen 34 drehbar gelagertes Ritzel 42 bzw. 43 in je eine mit einem Führungs- und Halteteil 44 verbundene Zahnstange 45 bzw. 46 in Eingriff stehen, wobei der Führungs- und Halteteil 44 oben und unten im Einschubrahmen 34 verschiebbar geführt ist.

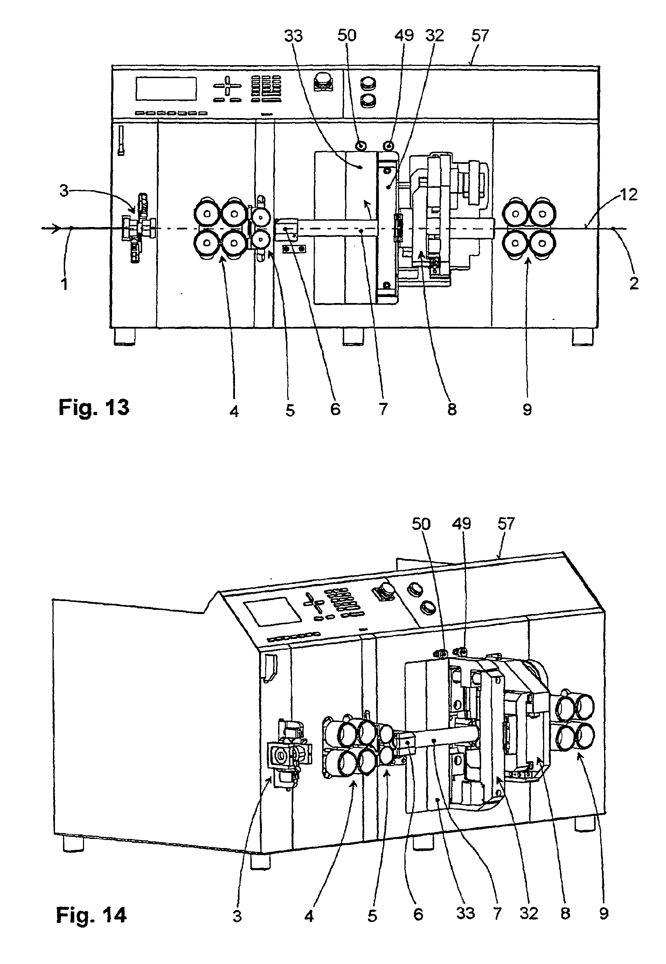

Der Einschubrahmen 44 ist seinerseits über zwei Horizontalführungen 47 und 48 seitlich verschiebbar innerhalb der Aussparung 33 der Vorrichtung 57 angeordnet, und dort mittels Arretierknöpfen 49 und 50 in einer rechten Einsatzstellung (siehe Figuren 13 und 14) sowie in einer linken Messerauswechselposition arretier-

bar.

Bei Einsatz dieser Leiterdurchtrennmodulein-heit 32 ergibt sich insofern eine Änderung des Arbeitsablaufes, dass die Schneidmessereinheit 8 nur noch für den Abisoliervorgang eingesetzt wird, und der Leiter-Durchtrennvorgang nur mit der Leiterdurchtrennmoduleinheit 32 bewerkstelligt wird, was wegen dem Abstand zwischen der Schneidebene der Durchtrennmesser 35, 36 und der Schneidebene der Schneidmesser 10, 11 beim Vorschub des stirnseitig bearbeiteten Leiters 1 (in Fig. 13) nach rechts zur Abtrennung der richtigen Länge des Leiterabschnittes 2 berücksichtigt werden muss.

Alle übrigen Verfahrensschritte sind analog zu den bereits anhand der Figuren 1 bis 10 beschriebenen Verfahrensschritten, so dass sich eine nochmalige Beschreibung derselben erübrigt.

Durch diese Aufspaltung des Durchtrenn- und des Abisoliervorganges auf eine reine Durchtrenn- und eine reine Abisoliereinheit ergibt sich in vielen Fällen zusätzlich eine wesentliche Verlängerung der Standzeit der Schneidmesser 10 und 11.

Werden später wieder nur noch Leiter 1 kleineren Querschnitts verarbeitet, dann ist es jederzeit möglich, die Leiterdurchtrennmoduleinheit 32 auf einfache Weise wieder aus der Vorrichtung 57 herauszunehmen, wobei in der letzteren Kontakte vorgesehen sind, welche bewirken, dass die Verschiebung der Leiterdurchtrennebene von der Schneidmessereinheit 8 zur Leiterdurchtrennmoduleinheit 32 resp. umgekehrt beim Vorschub des Leiters 1 nach rechts zur Erzielung der richtigen Länge des abzutrennenden Leiterabschnittes 2 in der Vor-richtungssteuerung (nicht dargestellt) automatisch be-rücksichtigt wird.

Die erfindungsgemässe Vorrichtung ist selbstverständlich zur Bearbeitung von allen Arten von Leitern, wie z.B. einfache Leiter, Lichtleiter, etc., einsetzbar.

**Patentansprüche**

1. Verfahren zum Abtrennen und/oder Abisolieren von mindestens einer Lage einer Ummantelung eines kabelförmigen Leiterabschnittes (2) mittels mindestens zweier Schneidmesser (10,11), wobei die Schneidmesser (10,11) um die Längsachse eines zu bearbeitenden Leiterendabschnitts drehbar sind und von einander gegenüberliegenden Seiten in schneidenden Eingriff mit dem zu bearbeitenden Leiterendabschnitt gebracht werden und eine durchtrennte Lage der Ummantelung durch Ziehen des zu bearbeitenden Leiterendabschnittes

    - mit den Schneidmessern (10, 11) in Schneidposition - mittels der Schneidmesser (10,11) längs der Leiterlängsachse (12) in Richtung auf das freie Ende des Leiterendabschnittes verschoben wird,

**dadurch gekennzeichnet, dass** man in einem Abisoliervorgang die Schneidmesser (10,11) von einander gegenüberliegenden Seiten um einen vorbestimmten Betrag in schneidenden Eingriff mit dem zu bearbeitenden Leiterendabschnitt bringt und wieder zurückbewegt, dann die Schneidmesser (10,11) in der gleichen Schneidebene aufeinanderfolgend schrittweise um die Längsachse des zu bearbeitenden Leiterendabschnittes dreht oder schwenkt und jedes Mal bei jedem Schritthalt um den gleichen Betrag in schneidenden Eingriff mit dem zu bearbeitenden Leiterendabschnitt bringt, und beim letzten Schneidevorgang durch Zurückziehen des zu bear-beitenden Leiterendabschnittes mit den Schneid-messern (10, 11) in Schneidposition die derart durchtrennte Lage der Ummantelung mittels der Schneidmesser (10,11) längs der Leiterlängsachse in Richtung auf das freie Ende des Leiterendabschnittes verschiebt.

2. Verfahren nach Anspruch 1, wobei der Abisoliervorgang ein- oder mehrmals mit abgestufter Einschneidetiefe wiederholt wird.

3. Verfahren nach einer der Ansprüche 1 oder 2 zum beidseitigen Abtrennen und Abisolieren von mindestens einer Lage einer Ummantelung eines von ei-nem Leiter abzutrennenden kabelförmigen Leiterab-schnittes mittels mindestens zweier Schneidmes-ser, **dadurch gekennzeichnet, dass** man den Leiter (1) bis in den Schneidebereich der Schneidmesser (10,11) vorwärts bewegt und dort den Leiter (1) durchtrennt, danach den Leiter (1) um einen der gewünschten Abisolierlänge entsprechenden Betrag weiter vorwärts bewegt, dann die Schneidmesser (10,11) von einander gegenüberliegenden Seiten um einen vorbestimmten Betrag in schneidenden Eingriff mit dem zu bearbeitenden Leiterendabschnitt bringt und wieder zurückbewegt, dann die Schneidmesser (10,11) in der gleichen Schneidebene aufeinanderfolgend schrittweise um die Längsachse (12) des zu bearbeitenden Leiterendabschnittes dreht oder schwenkt und jedes Mal bei jedem Schritthalt aus seiner Aussereingriffstellung um den gleichen Betrag in schneidenden Eingriff mit dem zu bearbeitenden Leiterendabschnitt bringt und beim letzten Schneidvorgang durch Zurückziehen des zu bearbeitenden Leiterendabschnittes mit den Schneidmessern (10, 11) in Schneidposition die derart durchtrennte Lage der Ummantelung mittels der Schneidmesser (10,11) längs der Leiterendachse (12) gegen das freie Ende des Leiterendabschnittes zu verschiebt, und diesen Abisoliervorgang gegebenenfalls ein- oder mehrmals mit abgestufter Einschneidtiefe wiederholt, danach den derart einseitig bearbeiteten Leiter (1) soweit durch die Schneidebene der diesen durchtrennenden Schneidmesser (10,11; 35,36) vorwärtsbewegt, bis der Abstand zwischen der Schneidebene und dem freien Ende des vorgängig bearbeiteten Leiterendabschnittes der gewünschten Leiterabschnittlänge entspricht und dann den Leiter (1) durchtrennt, danach das dem derart abgetrennten Leiterabschnitt (2) stirnseitig gegenüberstehende freie Ende des Leiters (1) aus dem Bearbeitungsbereich der Schneidmesser (10, 11) herausschwenkt, den derart abgetrennten Leiterabschnitt (2) um einen der gewünschten Abisolierlänge entsprechenden Betrag zurückbewegt und den Abisoliervorgang an diesem zweiten Endabschnitt des abgetrennten Leiterabschnittes (2) analog zum Abisoliervorgang am ersten Endabschnitt durchführt, nur mit umgekehrten Bewegungsrichtungen des abgetrennten Leiterabschnittes (2), dann den derart beidseitig fertig bearbeiteten Leiterabschnitt (2) abführt, danach das vorher aus dem Bearbeitungsbereich der Schneidmesser herausgeschwenkte freie Ende des Leiters (1) wieder in den Bearbeitungsbereich der Schneidmesser (10,11) hineinschwenkt, um einen der gewünschten Abisolierlänge entsprechenden Betrag weiter vorwärts bewegt, und danach die beidseitigen Abisolierschritte sowie den Abtrennvorgang des Leiterabschnittes auf dessen gewünschter Länge analog zu vorher durchführt.

4. Verfahren nach einem der Ansprüche 1 bis 3, **dadurch gekennzeichnet, dass** man die Schneidmesser (10, 11) in der gleichen Schneidebene aufeinanderfolgend schrittweise n-mal um einen Betrag von mindestens annähernd $\frac{90°}{n+1}$ um die Längsachse des zu bearbeitenden Leiterendabschnittes dreht oder schwenkt, und jedes Mal bei jedem Schritthalt um den gleichen Betrag in schneidenden Eingriff mit dem zu bearbeitenden Leiterendabschnitt bringt.

5. Verfahren nach einem der Ansprüche 1 bis 4, **dadurch gekennzeichnet, dass** man den Abtrenn- und den Abisoliervorgang mittels zweier voneinander getrennter, in Längsrichtung des zu bearbeitenden Leiterendabschnittes gesehen hintereinander angeordneter Schneidmessereinheiten (8,32) durchführt.

6. Verfahren nach Anspruch 3 oder 4, **dadurch gekennzeichnet, dass** der Vorschub des Leiters (1) sowie des Leiterabschnittes (2) mittels mit Schrittmotoren versehenen Vorschubeinheiten (4,9) erfolgt.

7. Verfahren nach Anspruch 6, **dadurch gekennzeichnet, dass** der dem Leiter(1) zugeordneten Vorschubeinheit (4) eine Encodereinheit (5) nachgeschaltet sowie eine mit der letzteren verbundene Auswerteinheit zur Bewirkung genau definierter Vorschubstrecken vorgesehen ist.

8. Vorrichtung zur Durchführung des Verfahrens nach Anspruch 1, mit einer mit einem zu bearbeitenden Leiterendabschnitt in schneidenden Eingriff bringbaren, um eine Längsachse (12) des Leiterendabschnitts drehbaren Schneidmessereinheit (10,11), **dadurch gekennzeichnet, dass** die Schneidmessereinheit (10,11) aufeinanderfolgend schrittweise um die Längsachse (12) des zu bearbeitenden Leiterendabschnittes dreh- oder schwenkbar ist und bei jedem Schritthalt aus einer Aussereingriffstellung um den gleichen Betrag in schneidenden Eingriff mit dem zu bearbeitenden Leiterendabschnitt bringbar ist.

9. Vorrichtung nach Anspruch 8, **dadurch gekennzeichnet, dass** die Schneidmessereinheit (10, 11) schrittweise um mindestens annähernd n-mal $\frac{90°}{n+1}$ um die Längsachse (12) des zu bearbeitenden Leiterendabschnittes dreh- oder schwenkbar ist.

10. Vorrichtung zur Durchführung des Verfahrens nach Anspruch 3, **dadurch gekennzeichnet, dass** sie eine erste Vorschubeinheit (4) zur gesteuerten Vor- und Rückwärtsbewegung eines Leiters (1) in eine um die Leiterlängsachse (12) dreh- oder schwenkbar angeordnete Schneidmessereinheit (10,11), sowie eine nach der letzteren angeordnete zweite Vorschubeinheit (9) zur gesteuerten Vor- und Rückwärtsbewegung eines vom Leiter (1) abgetrennten Leiterabschnittes (2) aufweist.

11. Vorrichtung nach einem der Ansprüche 8 bis 10, **dadurch gekennzeichnet, dass** die Schneidmessereinheit (10,11) zum Durchtrennen des Leiters (1) und/oder zum Abisolieren der Endabschnitte des Leiters bzw. Leiterabschnittes (2) ausgebildet ist.

12. Vorrichtung nach Anspruch 8, **dadurch gekennzeichnet, dass** der Schneidmessereinheit (10,11) zum Durchtrennen grösserer Leiterquerschnitte eine weitere Schneidmessereinheit (32) vorgeschaltet ist.

13. Vorrichtung nach einem der Ansprüche 8 bis 12, **dadurch gekennzeichnet, dass** zwischen der ersten Vorschubeinheit (4) und der zum Durchtrennen des Leiters (1) bestimmten Schneidmessereinheit (10,11;32) ein austrittsseitig aus dem Bearbeitungsbereich der Schneidmessereinheit herausschwenkbarer Leiterführungskanal (7) vorgesehen ist.

**Claims**

1. A method for the severing and/or stripping of at least one layer of a sheathing of a cable-shaped conductor section (2) by means of at least two cutting knives (10, 11), wherein the cutting knives (10, 11) are rotatable about the longitudinal axis of a conductor end section to be worked and can be brought into cutting engagement from sides situated opposite each other with the conductor end section to be worked and a severed layer of the sheathing is displaced along the conductor longitudinal axis 12 in the direction of the free end of the conductor end section through pulling of the conductor end section to be worked

   - with the cutting knives (10, 11) in cutting position - by means of the cutting knives (10, 11),

   **characterized in that** in a stripping operation the cutting knives (10, 11) are brought into cutting engagement with the conductor end section to be worked by a predetermined amount from sides located opposite to each other and moved back again, after this the cutting knives (10,11) in the same cutting plane subsequently in steps rotated or pivoted about the longitudinal axis of the conductor end section to be worked and each time at every step stop brought into cutting engagement with the conductor end section to be worked by the same amount, and during the last cutting operation through pulling back of the conductor end section to be worked with the cutting knives (10, 11) in cutting position the layer of the sheathing severed in this way displaced by means of the cutting knives (10, 11) along the conductor longitudinal axis in the direction of the free end of the conductor end section.

2. The method according to claim 1, wherein the stripping operation is repeated once or several times with stepped incision depth.

3. The method according to any one of the claims 1 or 2 for the severing and stripping on both sides of at least one layer of a sheathing of a cable-shaped conductor section to be severed from a conductor by means of at least two cutting knives, **characterized in that** the conductor (1) is moved forward up to the cutting region of the cutting knives (10, 11) and the conductor (1) severed there, thereafter the conductor moved further forward by an amount corresponding to the desired stripping length, then the cutting knives (10, 11) from sides located opposite to each other brought into cutting engagement with the conductor end section to be worked by a predetermined amount and moved back again, then the cutting knives (10, 11) rotated or pivoted in the same cutting plane successively in steps about the longitudinal axis (12) of the conductor end section to be worked and each time at every step hold brought out of their out-of-engagement position by the same amount into cutting engagement with the conductor end section to be worked and during the last cutting operation through pulling back of the conductor end section to be worked with the cutting knives (10, 11) in cutting position the layer of the sheathing severed in this way, displaced by means of the cutting knives (10, 11) along the conductor end axis (12) towards the free end of the conductor end section, and this stripping operation repeated once or several times with stepped incision depth if required, after this the conductor (1) worked on one side in this way moved forward through the cutting plane of the cutting knives (10,11; 35,36) severing said conductor until the distance between the cutting plane and the free end of the previously worked conductor end section corresponds to the desired conductor section length and then the conductor (1) separated, then the free end of the conductor (1) located opposite the face of the conductor section (2) severed in this way, pivoted out of the working region of the cutting knives (10, 11) the conductor section (2) severed in this way moved back by an amount corresponding to the desired stripping length and the stripping operation performed on this second end section of the severed conductor section (2) analogue to the stripping operation on the first end section, only with reversed directions of movement of the severed conductor section (2), then the conductor section (2) finish-worked in this way on both sides discharged, then the free end of the conductor (1) previously pivoted out of the working region of the cutting knives, again pivoted into the working region of the cutting knives (10, 11), moved further forward by an amount corresponding to the desired stripping length and then the stripping steps on both sides and the severing operation of the conductor section performed to its desired length analogue to previously.

4. The method according to any one of the claims 1 to 3, **characterized in that** the cutting knives (10, 11) are rotated or pivoted in the same cutting plane successively in steps n-times by an amount of at least approximately $\dfrac{90^{o}}{n+1}$ about the longitudinal axis of the conductor end section to be worked, and each time at every step hold brought into cutting engagement with the conductor end section to be worked by the same amount.

5. The method according to any one of the claims 1 to 4, **characterized in that** the severing and the stripping operation are performed by means of two cutting knife units (8, 32) arranged in series seen in the longitudinal direction of the conductor end section to be worked which are separate from each other.

**6.** The method according to claim 3 or 4, **characterized in that** the feed of the conductor (1) as well as the conductor section (2) takes place by means of the feed units (4, 9) provided with stepping motors.

**7.** The method according to claim 6, **characterized in that** an encoder unit (5) is arranged downstream of the feed unit (4) associated with the conductor (1) and an evaluation unit for bringing about exactly defined feed distances connected with said encoder unit is provided.

**8.** A device for carrying out the method according to claim 1, with a cutting knife unit (10, 11) capable of being brought into cutting engagement with a conductor end section to be worked, rotatable about a longitudinal axis (12) of the conductor end section, can be successively in steps rotated or pivoted about the longitudinal axis (12) of the conductor end section to be worked and at every step hold can be brought from an out-of-engagement position into cutting engagement by the same amount with the conductor end section to be worked.

**9.** The device according to claim 8, **characterized in that** the cutting knife unit (10, 11) in steps can be rotated or pivoted by at least approximately n-times

$$\frac{90^{\mathrm{o}}}{n+1}$$ about the longitudinal axis (12) of the conductor end section to be worked.

**10.** The device for carrying out the method according to claim 3, **characterized in that** it has a first feed unit (4) for controlled forward and reverse movement of a conductor (1) into a cutting knife unit (10,11) arranged in a rotatable or pivotable manner about the conductor longitudinal axis (12), and a second feed unit (9) arranged after the latter for the controlled forward and reverse movement of a conductor section (2) severed from the conductor (1).

**11.** The device according to any one of the claims 8 to 10, **characterized in that** the cutting knife unit (10, 11) is designed for severing the conductor (1) and/or for stripping the end sections of the conductor or conductor section (2).

**12.** The device according to claim 8, **characterized in that** a further cutting knife unit (32) is arranged upstream of the cutting knife unit (10,11) for severing larger conductor cross sections.

**13.** The device according to any one of the claims 8 to 12, **characterized in that** between the first feed unit (4) and the cutting knife unit (10, 11; 32) intended for severing the conductor (1) a conductor guide channel (7) that can be pivoted out of the working region of the cutting knife unit at the discharge end is provided.

## Revendications

**1.** Procédé pour sectionner et/ou pour dénuder au moins une couche d'une gaine d'un conducteur sous forme de câble (2) au moyen d'au moins deux couteaux (10, 11), les couteaux (10, 11) étant rotatifs autour de l'axe longitudinal d'un tronçon d'extrémité de conducteur à traiter, et étant amenés à partir de côtés opposés en engagement coupant avec le tronçon d'extrémité de conducteur à traiter et une couche sectionnée de la gaine étant déplacée (en position de coupe avec les couteaux (10, 11), par traction du tronçon d'extrémité de conducteur à traiter au moyen des couteaux (10, 11), en direction de l'extrémité libre du tronçon d'extrémité du conducteur, **caractérisé en ce que**, lors d'un processus de dénudage, on amène les couteaux (10, 11) à partir de côtés opposés d'une valeur prédéfinie en engagement coupant avec le tronçon d'extrémité de conducteur à traiter et on les ramène vers l'arrière, puis on fait tourner ou pivoter successivement les couteaux (10, 11) dans le même plan de coupe autour de l'axe longitudinal du tronçon d'extrémité de conducteur à traiter et lors du dernier processus de coupe, par retrait vers l'arrière du tronçon d'extrémité de conducteur à traiter avec les couteaux (10, 11), on déplace la couche de la gaine sectionnée de cette façon le long de l'axe longitudinal du conducteur, en direction de l'extrémité libre du tronçon d'extrémité du conducteur.

**2.** Procédé selon la revendication 1, le processus de dénudage étant répété une ou plusieurs fois, avec une profondeur d'incision échelonnée.

**3.** Procédé selon l'une quelconque des revendications 1 ou 2 pour sectionner et/ou pour dénuder au moins une couche d'une gaine d'un conducteur sous forme de câble devant être sectionnée d'un conducteur au moyen d'au moins deux couteaux (10, 11), **caractérisé en ce que**, on déplace le conducteur (1) vers l'avant, jusque dans la zone de coupe des couteaux (10, 11), et qu'on y sectionne le conducteur (1), puis on déplace encore le conducteur (1) vers l'avant, d'une valeur correspondant à la longueur de dénudage souhaitée, puis à partir de côtés opposés, on amène les couteaux (10, 11) d'une valeur prédéfinie en engagement coupant avec le tronçon d'extrémité de conducteur à traiter et on les ramène vers l'arrière, puis on fait tourner ou pivoter successivement les couteaux (10, 11) dans le même plan de coupe autour de l'axe longitudinal du tronçon d'extrémité de conducteur à traiter et à chaque fois, à chaque pas de l'étape, de leur position de non engagement de la même valeur en engagement coupant avec le tronçon d'extrémité de conducteur à traiter et au cours du dernier processus de coupe, par retrait vers l'arrière du tronçon d'extrémité de conducteur à traiter avec les couteaux (10, 11), on déplace la couche de la gaine sectionnée de cette façon au moyen des couteaux (10, 11) le long de l'axe d'extrémité du conducteur, en direction de l'extrémité libre du tronçon d'extrémité du conducteur et on répète ce processus de dénudage le cas échéant, une ou plusieurs fois, avec une profondeur d'incision échelonnée, puis on déplace vers l'avant le conducteur (1) ainsi traité unilatéralement dans le plan de coupe des couteaux (10, 11 ; 35, 36) sectionnant ce dernier aussi loin, jusqu'à ce que la distance entre le plan de coupe et l'extrémité libre du tronçon de conducteur précédemment traité corresponde à la longueur de sectionnement de conducteur souhaitée et on sectionne ensuite le conducteur (1), ensuite, on fait pivoter l'extrémité libre du conducteur (1) opposée côté frontal au tronçon de conducteur (2) ainsi sectionné hors de la zone de traitement des couteaux (10, 11), on ramène vers l'arrière le tronçon de conducteur ainsi sectionné (2) d'une valeur correspondant à la longueur de dénudage souhaitée et on réalise le processus de dénudage sur ce deuxième tronçon d'extrémité du tronçon de conducteur (2) sectionné, de façon analogue au processus de dénudage du premier tronçon, mais dans des sens de déplacement opposés du tronçon de conducteur (2) sectionné, puis on évacue le tronçon de conducteur (2) qui est fini d'être traité bilatéralement de la sorte, et on refait pivoter l'extrémité libre du conducteur (1) précédemment pivotée hors de la zone de traitement des couteaux dans la zone de traitement des couteaux (10, 11), on la déplace encore vers l'avant, d'une valeur correspondant à la longueur de dénudage souhaitée et on réalise ensuite les étapes de dénudage bilatéral, ainsi que le processus de sectionnement du tronçon de conducteur à sa longueur souhaitée, de façon analogue à la précédente.

4. Procédé selon l'une quelconque des revendications 1 ou 2, **caractérisé en ce que**, on fait tourner ou pivoter les couteaux (10, 11) successivement dans le même plan de coupe n fois d'une valeur d'au moins approximativement $\frac{90°}{n+1}$ autour de l'axe longitudinal du tronçon d'extrémité de conducteur à traiter et **en ce que**, chaque fois, à chaque pas de l'étape, on l'amène de la même valeur, en engagement coupant avec le tronçon d'extrémité de conducteur à traiter.

5. Procédé selon l'une quelconque des revendications 1 à 4, **caractérisé en ce que**, on réalise le processus de sectionnement et de dénudage au moyen de deux unités de couteaux (8, 32) séparées l'une de l'autre, disposées l'une derrière l'autre, vues en direction longitudinale du tronçon d'extrémité de conducteur à traiter.

6. Procédé selon la revendication 3 ou 4, **caractérisé en ce que** l'avance du conducteur (1), ainsi que celle du tronçon de conducteur (2) est assurée au moyen d'unités d'avance (4, 9) munies de moteurs pas à pas.

7. Procédé selon la revendication 6, **caractérisé en ce que**, en aval de l'unité d'avance (4) associée au conducteur (1) est montée une unité d'encodage (5), et qu'une unité d'évaluation reliée à cette dernière est prévue pour assurer des trajets d'avance précisément définis.

8. Dispositif pour réaliser le procédé selon la revendication 1, avec une unité de couteaux (10, 11) susceptible d'être amenée en engagement coupant avec le tronçon d'extrémité de conducteur à traiter, rotative autour d'un axe longitudinal (12) du tronçon d'extrémité du conducteur, **caractérisé en ce que** l'unité de couteaux (10, 11) est susceptible de pivoter successivement par étapes autour de l'axe longitudinal (12) du tronçon d'extrémité de conducteur à traiter et qu'à chaque pas de l'étape, elle est susceptible d'être amenée d'une position hors engagement, de la même valeur, en engagement coupant avec le tronçon d'extrémité de conducteur à traiter.

9. Dispositif selon la revendication 8, **caractérisé en ce que** l'unité de couteaux (10, 11) est susceptible de tourner ou de pivoter par étapes d'au moins approximativement n fois $\frac{90°}{n+1}$ autour de l'axe longitudinal (12) du tronçon d'extrémité de conducteur à traiter.

10. Dispositif pour réaliser le procédé selon la revendication 3, **caractérisé en ce que**, il comporte une première unité d'avance (4), pour le déplacement commandé vers l'avant et vers l'arrière d'un conducteur (1), dans une unité de couteaux (10, 11) disposée pour être susceptible de tourner ou de pivoter autour de l'axe longitudinal (12), ainsi qu'une deuxième unité d'avance (9) disposée en aval de cette dernière, pour le déplacement commandé vers l'avant et vers l'arrière d'un tronçon de conducteur (2) sectionné du conducteur (1).

11. Dispositif selon la revendication 8, **caractérisé en ce que** l'unité de couteaux (10, 11) est conçue pour sectionner le conducteur (1) et/ou pour dénuder les tronçons d'extrémité du conducteur ou du tronçon de conducteur (2).

**12.** Dispositif selon la revendication 8, **caractérisé en ce que**, une unité de couteaux (32) supplémentaire est montée en amont de l'unité de couteaux (10, 11), pour sectionner des sections transversales de conducteur plus grandes.

**13.** Dispositif selon l'une quelconque des revendications 8 à 12, **caractérisé en ce que**, entre la première unité d'avance (4) et l'unité de couteaux (10, 11 ; 32) destinée à sectionner le conducteur (1) est prévu un conduit de guidage des conducteurs (7) susceptible de pivoter côté sortie hors de la zone de traitement de l'unité de couteaux.

**Fig. 1**

**Fig. 2**

**Fig. 3**

16   25   24
29
26
23
12
18
19
14
21
20
8
13
15
27
17
10
11

**Fig. 4**

26   22   23   27   24
29
28
15

**Fig. 5**

**Fig. 6**

16  15  28  27  24          25  26      18  19

20

11

8

12

30

**Fig. 7**

17        10

24

25

18

19

27

21

20

11

16

8

15

12

28

**Fig. 8**        17        10

16    25    24

18
19
14
20
12
13
15
27
28
30
17
11
10
8

**Fig. 9**

**Fig. 10**

8    26    27

15

30

EP 1 079 478 B1

**Fig. 11**

**Fig. 12**

16

**Fig. 13**

**Fig. 14**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4993147 A
- US 4873901 A
- CH 660096
- EP 0365691 A1
- US 5469763 A